# FASCICULE DE BREVET EUROPEEN

(11) **EP 0 740 309 B1**
(45) Date de publication et mention de la délivrance du brevet: **03.02.1999**
(21) Numéro de dépôt: 96400886.6
(22) Date de dépôt: 25.04.1996
(51) Int. Cl.: G21C 3/326, G21C 3/328

(54) **Procédé de reconstitution d'assemblage de combustible nucléaire partiellement épuisé**
Verfahren zur Wiederherstellung eines teilgebrannten Kernbrennstabbündels
Method for reconstituting a partially burnt nuclear fuel assembly

(30) Priorité: 28.04.1995 FR 9505150
(43) Date de publication de la demande: 30.10.1996
(73) Titulaire: FRAMATOME, 92400 Courbevoie (FR); COMPAGNIE GENERALE DES MATIERES NUCLEAIRES, F-78140 Velizy Villacoublay (FR)
(72) Inventeur: Mahe, Patrice, 69003 Lyon (FR); Hertz, Dominique, 69110 Sainte-Foy-Les-Lyon (FR)
(74) Mandataire: Fort, Jacques

(56) Documents cités:
- DE-A- 2 920 304
- DE-A- 3 142 299
- FR-A- 2 693 023
- DATABASE WPI Week 7644 Derwent Publications Ltd., London, GB; AN 76-82224X XP002008029 & JP-A-51 105 594 (HITACHI) , 19 Septembre 1976
- DATABASE WPI Week 8524 Derwent Publications Ltd., London, GB; AN 85-143873 XP002008030 & JP-A-60 078 385 (GENSHI NENRYO KOGYO) , 4 Mai 1985
- PATENT ABSTRACTS OF JAPAN vol. 15, no. 344 (P-1245) 30 Août 1991 & JP-A-03 128 482 (TOSHIBA) 31 Mai 1991
- PATENT ABSTRACTS OF JAPAN vol. 17, no. 16 (P-1468) 12 Janvier 1993 & JP-A-04 244 994 (TOSHIBA) 01 Septembre 1992

## Description

La présente invention concerne les procédés de reconstitution d'assemblage de combustible nucléaire partiellement épuisé, du type dont les crayons contiennent un combustible constitué essentiellement d'oxydes d'uranium et de plutonium.

Il est quelquefois nécessaire de retirer un crayon d'un assemblage ayant déjà subi un ou plusieurs cycles de passage en réacteur. Par exemple, il peut s'agir d'un crayon "fuitard". On peut aussi délibérément extraire des crayons pour les examiner avant de recharger l'assemblage pour un nouveau cycle en réacteur.

Un assemblage ne peut généralement pas être rechargé en y laissant des emplacements de crayon vides. Le crayon de remplacement doit perturber le moins possible la distribution de puissance dans l'assemblage et dans le coeur du réacteur.

Dans les assemblages où le seul matériau fissile est l'uranium sous forme d'UO₂, on peut remplir ces conditions avec des crayons de remplacement en acier ou constitués de pastilles d'oxyde d'uranium gainé ayant un enrichissement plus faible que l'enrichissement initial des crayons remplacés, dans une gaine.

En revanche, le remplacement d'un crayon dans un assemblage combustible du type ci-dessus défini pose beaucoup plus de problèmes.

On pourrait penser qu'il suffit de conserver en réserve un petit nombre de crayons contenant, comme les crayons de l'assemblage d'origine, un mélange d'oxydes d'uranium et de plutonium, avec une teneur en plutonium réduite. Cette solution n'est pas viable techniquement et économiquement. Le stockage des crayons en attendant leur éventuelle utilisation conduit à une dégradation de la composition isotopique, une partie du Pu241 passant à l'état de Am241, d'où une diminution de réactivité et une teneur en américium dépassant des valeurs admissibles. Les matériaux contenant du plutonium ne peuvent être transportés qu'avec une autorisation administrative et exigent des moyens tels que les délais sont incompatibles avec l'intervalle de temps alloué au rechargement d'un réacteur entre un cycle et le suivant. Enfin, la fabrication d'un petit nombre de crayons contenant du plutonium à une teneur particulière est coûteuse.

Le problème est encore compliqué du fait que le matériau contenu dans les crayons d'un assemblage du type ci-dessus n'a généralement pas la même composition dans tous les crayons. Cela rendrait en conséquence nécessaire de disposer en réserve de plusieurs types de crayons différents.

On pourrait penser que le problème pourrait être résolu en utilisant des crayons contenant des matériaux couramment utilisés en réacteur ou constitués de tels matériaux, par exemple des crayons contenant uniquement de l'oxyde d'uranium dans une gaine, des crayons en acier ou des crayons de constitution comparable à celle des crayons des grappes de contrôle (contenant du gadolinium, de l'erbium, ou un alliage argent-indium-cadmium) ou des crayons en acier au bore.

Toutes ces solutions sont peu satisfaisantes, pour diverses raisons.

Pour les comprendre, il faut notamment se souvenir qu'en cas de remplacement d'un crayon partiellement épuisé par un crayon combustible, deux cas peuvent se présenter tout au long du séjour de l'assemblage réparé en réacteur.

Si la réactivité du crayon de remplacement est supérieure à celle de son prédécesseur, il y a alors en général diminution du facteur de puissance sur les crayons voisins dans l'assemblage et augmentation de puissance sur le crayon remplacé. Le pic de puissance de l'assemblage peut même se déplacer et venir sur le crayon de remplacement.

Si la réactivité du crayon de remplacement est plus faible que celle de son prédécesseur, il y a une augmentation du facteur de puissance de ses voisins immédiats.

Du fait des caractéristiques absorbantes du plutonium et pour perturber le moins possible la distribution de puissance de l'assemblage, il faut utiliser un crayon absorbant pour remplacer des crayons d'un assemblage à oxydes d'uranium et de plutonium.

Or un crayon de remplacement en acier présente une absorption relativement faible. Sa présence se traduit par une modification de la répartition de puissance excessive. Si on ajoute à l'acier un composant absorbant, tel que le bore, pour compenser ce défaut immédiatement après le rechargement de l'assemblage, la disparition progressive du bore en cours de cycle fait que l'on retrouve le problème précédent au bout d'une fraction de cycle. De plus, la présence de bore entraîne une perte de puissance des crayons voisins, donc de la réactivité de l'assemblage.

Un crayon contenant un poison consommable, tel que le gadolinium ou l'erbium, présente le même inconvénient que les crayons en acier au bore.

Un crayon très absorbant en alliage Ag-In-Cd provoque une diminution excessive de la puissance des crayons voisins du crayon remplacé, donc de la réactivité de l'assemblage.

L'invention vise à fournir un procédé de reconstitution d'assemblage du type défini ci-dessus n'exigeant pas l'utilisation d'un crayon de remplacement contenant du plutonium (ou même un autre matériau fissile), ne perturbant que de façon admissible la réactivité et la puissance de l'assemblage dans lequel il est inséré et en particulier le facteur de puissance radiale F_{xy}, et cela quel que soit l'emplacement qu'il occupe dans l'assemblage.

Dans ce but, il est proposé d'utiliser un crayon ne contenant pas de matériau combustible, suffisamment aborbant pour limiter l'augmentation de puissance des crayons qui l'entourent, ne diminuant pas non plus notablement la réactivité et la puissance moyenne de l'assemblage, et conservant ses propriétés sans dégradation excessive au cours des cycles de passage en réacteur après remplacement.

L'invention propose notamment un procédé de reconstitution d'assemblage du type ci-dessus défini, caractérisé en ce qu'on remplace le crayon ou chaque crayon extrait par un crayon neuf dépourvu de matériau combustible et constitué d'un mélange d'un matériau transparent aux neutrons et d'un matériau neutrophage en proportions telles que la puissance moyenne de l'assemblage lors du passage ou des passages ultérieurs en réacteur ne soit pas modifiée de plus de 8 % par rapport à un assemblage non modifié et que le facteur de puissance radial F_{xy} de l'assemblage ne soit pas modifié de plus de 1 % et ceci pour toutes les positions du crayon remplacé.

On considérera qu'un matériau est transparent aux neutrons lorsqu'il présente une section de capture des neutrons thermiques comparable à celle des alliages à base de zirconium couramment utilisés pour les gaines, c'est-à-dire pratiquement inférieure à 1 barn. On considérera qu'un matériau est neutrophage lorsqu'il présente une section de capture d'absorption des neutrons supérieure à 100 barns.

Suivant un aspect de l'invention, le crayon neuf est constitué de hafnium et zirconium, la teneur en hafnium étant comprise entre 10 et 60 % en poids. Le zirconium n'a qu'une très faible section de capture des neutrons, tandis que l'hafnium est un élément pratiquement aussi absorbant que l'alliage Ag-In-Cd. L'efficacité d'absorption de l'hafnium ne diminue que lentement, car un certain nombre de ses isotopes se transforment en isotopes plus absorbants et l'hafnium produit finalement du tantale 181, qui est lui-même absorbant. L'hafnium peut être sous forme de pastilles Hf-Zr frittées contenues dans une gaine en alliage à base de zirconium, avec une densité qui sera généralement comprise entre 65 et 75 % de la densité théorique, par exemple 70 % environ. Pour une densité plus élevée, la teneur en hafnium peut être plus faible. L'alliage à base de zirconium peut être du "Zircaloy 4", qui est déjà largement utilisé pour les gaines et qui est imperméable à l'hydrogène, ce qui supprime le risque d'hydruration et donc de gonflement des pastilles Hf-Zr. Cependant, le mélange Hf-Zr peut également être utilisé sous forme de barre massive.

Suivant un autre aspect de l'invention, le crayon neuf est constitué d'un mélange de tantale et de niobium. Comme Hf et Zr, ces métaux sont missibles en toutes proportions et leurs alliages peuvent être frittés en pastilles. On peut encore utiliser des empilements de pastilles dans une gaine qui évite l'hydruration et le gonflement du matériau. Deux passages successifs en réacteur ne font disparaître que 5 % environ de la quantité de tantale au maximum. Etant donné la nécessité d'une teneur initiale d'au moins 50 %, les caractéristiques sont peu modifiées. Comme Hf-Zr, le mélange Ta-Nb peut être présent en pastilles frittés ayant une densité d'environ 70 % de la densité maximum théorique.

Suivant un autre aspect encore de l'invention, il est possible d'utiliser des crayons neufs dont le matériau transparent aux neutrons est le titane.

Dans le cas fréquent où les crayons d'un même assemblage ont des teneurs en plutonium différentes suivant leur emplacement dans l'assemblage, il est de beaucoup préférable de disposer de crayons de remplacement ayant des compositions différentes, dans les fourchettes mentionnées plus haut. Lorsque par exemple l'assemblage a des crayons d'un groupe central ayant une première teneur t₁ en plutonium, un groupe périphérique de crayons ayant une teneur t₂ inférieure à t₁ et un groupe de crayons de coin ayant une teneur t₃ inférieure à t₂, les crayons de remplacement des crayons du groupe central ont une teneur en matériau neutrophage supérieure à la teneur en matériau neutrophage des deux autres.

Les caractéristiques ci-dessus ainsi que d'autres apparaîtront mieux à la lecture de la description qui suit de modes particuliers de réalisation de l'invention, donnés à titre d'exemples non limitatifs. La description se réfère aux dessins qui l'accompagnent, dans lesquels :
- la figure 1 est une vue en plan destinée à montrer une répartition possible des crayons en trois groupes contenant du plutonium à des teneurs différentes, dans un assemblage neuf ;
- la figure 2 est un diagramme montrant la perte maximale de puissance moyenne d'un assemblage au cours de deux cycles d'irradiation suivants lors du remplacement d'un crayon partiellement épuisé d'un assemblage du genre montré en figure 1, suivant la position du crayon remplacé dans l'assemblage et pour divers matériaux contenus dans le crayon de remplacement ;
- la figure 3 est un diagramme montrant la variation du facteur de puissance radiale F_{xy} de l'assemblage suivant la position du crayon remplacé, pour diverses constitutions du crayon.

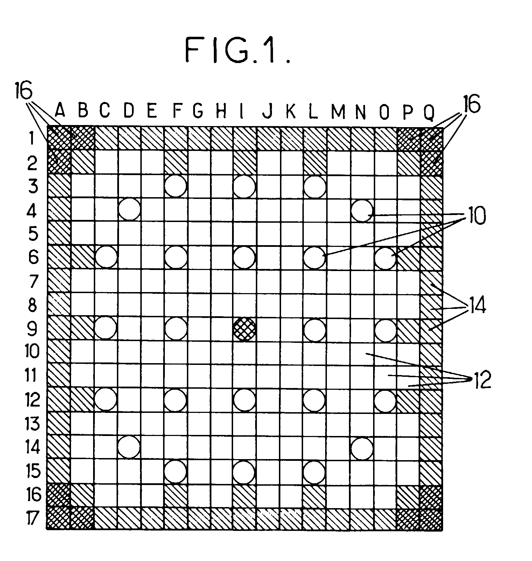

L'assemblage schématisé en figure 1 est du genre déjà décrit dans la demande de brevet FR-A-2 693 023, à laquelle on pourra se reporter. Il comporte des crayons répartis aux noeuds d'un réseau carré à 17 x 17 positions. Vingt-quatre emplacements 10, représentés par des cercles, sont occupés par des tubes guides. L'emplacement central est occupé par un tube d'instrumentation. Les crayons de combustible sont répartis en trois groupes ayant des teneurs en plutonium différentes. Un groupe central est constitué de crayons 12 ayant une première teneur t₁ en plutonium, aux emplacements indiqués en blanc. Un second groupe comporte une rangée périphérique de crayons 14, aux emplacements indiqués en hachures, ayant une teneur en plutonium t₂<t₁. Un troisième groupe est constitué par des crayons de coin 16 occupant les emplacements indiqués en hachures croisées. Ils ont une teneur t₃ inférieure à t₂. L'influence du croisement des lames d'eau entre des assemblages adjacents se faisant sentir au-delà des quatre crayons de coin, le troisième groupe est avantageusement constitué de trois crayons à chaque coin.

A titre d'exemple, on considérera maintenant le cas d'un assemblage du genre montré en figure 1, dans lequel le combustible est constitué par de l'uranium appauvri à O,225 % de U235 et du plutonium avec des teneurs :
t₁ = 5,99 %
t₂ = 3,87 %
t₃ = 2,70 %

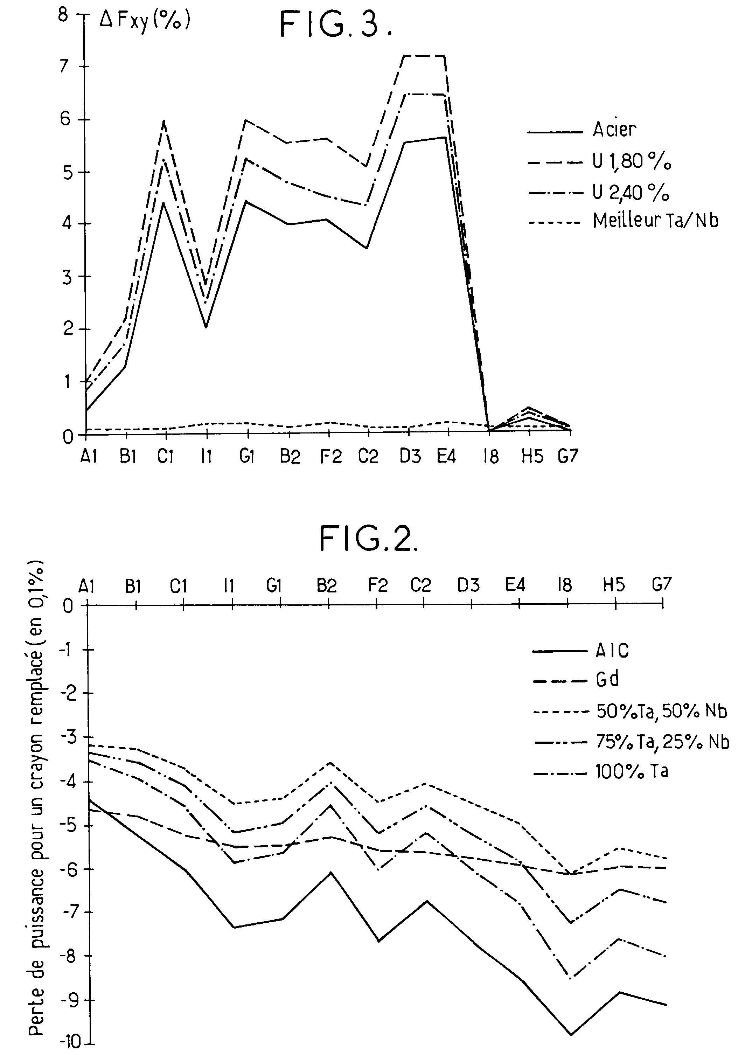

Dans ce cas, l'effet du remplacement d'un crayon par un crayon absorbant sur la puissance moyenne fournie par l'assemblage immédiatement après rechargement, suivant la position du crayon remplacé, est donné en figure 2. Sur cette figure, la position des crayons est indiquée par les chiffres et les lettres déjà donnés en figure 1. La perte de puissance moyenne de l'assemblage n'est indiquée que pour quelques positions de crayon, qui sont cependant représentatives, du fait qu'elles correspondent aux divers cas particuliers possible et du fait de la symétrie d'ordre 4 de l'assemblage.

On constate que la perte de puissance moyenne de l'assemblage est relativement faible dans le cas du gadolinium, quel que soit l'emplacement du crayon de remplacement. Elle est beaucoup plus marquée dans le cas d'un crayon de remplacement contenant un alliage Ag-In-Cd. Suivant la teneur en tantale d'un crayon de remplacement en Ta-Nb, la perte de puissance moyenne varie. D'autre part, la teneur en tantale influe sur la variation de puissance de chacun des crayons et en particulier du crayon de puissance maximale (voir tableau II ci-après).

On obtiendrait des résultats comparables pour un mélange zirconium-hafnium.

L'incidence du remplacement sur le facteur de puissance radial de l'assemblage apparaît sur la figure 3. Sur cette figure apparaît l'intérêt de l'utilisation d'un crayon absorbant Hf-Zr ou Ta-Nb comparé à un crayon contenant un matériau à faible section de capture neutronique et à un crayon contenant de l'oxyde d'uranium enrichi. La courbe correspondant à l'emploi de Ta-Nb correspond au meilleur choix possible de la teneur en tantale, à chaque emplacement.

Les figures 2 et 3 correspondent à un remplacement entre le premier et le second cycle de passage en réacteur. Pratiquement, les résultats favorables montrés en figure 3 sont conservés en prévoyant seulement trois compositions possibles, et quelquefois même deux. Dans le tableau I ci-après :

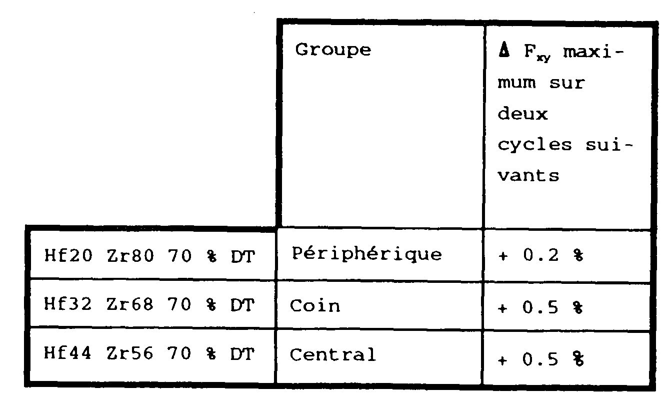

Δ F_{xy} désigne la variation relative de F_{xy} entre le cas où on effectue le remplacement de crayon et le cas où on laisse l'assemblage en état. On obtient des résultats comparables avec les alliages tantale-niobium. Le tableau II ci-après montre qu'il suffit de trois teneurs en tantale (50 %, 75 % et 100 %) pour assurer le meilleur compromis possible entre les pertes de puissance (figure 2) et les pénalités neutroniques.

**Tableau II**

| Alliage | | A1 | B1 | C1 | I1 | G1 | B2 | F2 | C2 | D3 | E4 | I8 | H5 | G7 |
|---|---|---|---|---|---|---|---|---|---|---|---|---|---|---|
| Ta pur | ΔFxy | 0.1 | 0.2 | 0.1 | 0.3 | 0.2 | 0.1 | 0.2 | 0.1 | 0.1 | 0.2 | 0.2 | 0.2 | 0.1 |
| Ta75Nb25 | ΔFxy | 0.1 | 0.1 | 0.8 | 0.2 | 0.9 | 0.2 | 0.3 | 0.1 | 1.4 | 1.5 | 0.1 | 0.2 | 0.1 |
| Ta50Nb50 | ΔFxy | 0.1 | 0.1 | 2.7 | 0.2 | 2.7 | 2.0 | 1.9 | 1.3 | 2.9 | 3.0 | 0.1 | 0.1 | 0.1 |

Du fait que la teneur en tantale est toujours très élevée, égale ou supérieure à 50 %, l'épuisement du tantale n'est que très progressif et les résultats favorables obtenus immédiatement après le remplacement subsistent, même en cas de deux cycles successifs en réacteur après remplacement. En effet, dans le pire cas, il n'y disparition que de 5 % environ de la quantité de tantale. Cela n'altère pas les propriétés macroscopiques du crayon de remplacement.

## Revendications

1. Procédé de reconstitution d'assemblage combustible nucléaire partiellement épuisé dont les crayons contiennent un combustible constitué essentiellement d'oxydes d'uranium et de plutonium,
caractérisé en ce qu'on remplace le ou chaque crayon extrait par un crayon neuf dépourvu de matériau combustible et constitué d'un mélange d'un matériau transparent aux neutrons et d'un matériau neutrophage, en proportions telles que la puissance moyenne de l'assemblage lors d'un ou de passages ultérieurs en réacteur ne soit pas modifiée de plus de 8 % par rapport à un assemblage non modifié et que la variation du facteur de puissance radial de l'assemblage F_{xy} ne dépasse pas 1 %.

2. Procédé selon la revendication 1, caractérisé en ce que le crayon neuf est constitué de hafnium et de zirconium.

3. Procédé selon la revendication 2, caractérisé en ce que la teneur en hafnium est comprise entre 10 et 60 % en poids.

4. Procédé selon la revendication 1, caractérisé en ce que le crayon neuf est constitué de tantale et de niobium, la teneur en tantale étant d'au moins 50 % en poids.

5. Procédé selon la revendication 1, caractérisé en ce que le matériau transparent aux neutrons du crayon neuf est constitué de titane.

6. Procédé selon l'une quelconque des revendications 1 à 4, caractérisé en ce que le mélange est sous forme de pastilles frittées ayant une densité proche de 70 % de la densité théorique et contenues dans une gaine en alliage à base de zirconium.

7. Procédé selon l'une quelconque des revendications 1 à 5, caractérisé en ce que le mélange est sous forme de barreau massif.

8. Procédé selon l'une quelconque des revendications précédentes, caractérisé en ce que le crayon neuf a une composition différente, parmi deux ou trois teneurs, suivant l'emplacement du crayon à remplacer dans l'assemblage.

9. Procédé selon la revendication 1, caractérisé en ce que, l'assemblage combustible comprenant des crayons d'un groupe central ayant une première teneur t₁ en plutonium, un groupe périphérique de crayons ayant une teneur t₂ inférieure à t₁ et un groupe de crayons de coin ayant une teneur t₃ inférieure à t₂, les crayons de remplacement des crayons du groupe central ont une teneur en matériau neutrophage supérieure à la teneur en matériau neutrophage des deux autres.

## Patentansprüche

1. Verfahren zur Wiederherstellung einer teilweise abgebrannten Brennstoffkassette, deren Brennstäbe einen Brennstoff enthalten, der hauptsächlich aus Uran-Dioxyd und Plutonium besteht, dadurch gekennzeichnet,
daß der oder jeder entnommene Brennstab durch einen neuen Brennstab ohne brennbares Material ersetzt wird und aus einer Mischung eines für Neutronen durchlässigen Materials und eines Neutronen absorbierenden Materials besteht, wobei die Anteile so verteilt sind, daß die Änderung der mittleren Leistung der Kassette nach einem Reaktordurchgang oder weiteren Reaktordurchgängen gegenüber einer nicht geänderten Brennstoffkassette nicht größer als 8 % ist und, daß die Änderung des radialen Leistungsfaktors der Kassette F_{XY} 1 % nicht übersteigt.

2. Verfahren nach Anspruch 1, dadurch gekennzeichnet, daß der neue Brennstab aus Hafnium und Zirkonium besteht.

3. Verfahren nach Anspruch 2, dadurch gekennzeichnet, daß der Hafniumgehalt zwischen 10 und 60 Gew.-% liegt.

4. Verfahren nach Anspruch 1, dadurch gekennzeichnet, daß der neue Brennstab aus Tantal und Niob besteht, wobei der Tantalgehalt geringer als 50 Gew.-% ist.

5. Verfahren nach Anspruch 1, dadurch gekennzeichnet, daß das für Neutronen durchlässige Material des neuen Brennstabes aus Titan besteht.

6. Verfahren nach einem der Ansprüche 1 bis 4, dadurch gekennzeichnet, daß die Mischung gesinterte Plättchen mit einer Dichte nahe 70 % der theoretischen Dichte sind und in einer auf einer Zirkoniumlegierung basierenden Hülle enthalten sind.

7. Verfahren nach einem der Ansprüche 1 bis 5, dadurch gekennezeichnet, daß die Mischung aus massiven Stäben besteht.

8. Verfahren nach einem der vorherigen Ansprüche, dadurch gekennzeichnet, daß der neue Brennstab je nach dem Standort des in der Kassette zu ersetzenden Brennstabes eine unterschiedliche Zusammensetzung aus zwei oder drei Gehalten hat.

9. Verfahren nach Anspruch 1, dadurch gekennzeichnet, daß die Brennstabkassette, die Brennstäbe einer mittleren Gruppe aufweist, einen ersten Plutoniumgehalt t₁ hat, eine Gruppe am Rand der Brennstäbe einen Gehalt t₂ hat, der geringer als t₁ ist, und eine Gruppe an den Ecken einen Gehalt t₃ aufweist, der geringer als t₂ ist, wobei die Ersatzbrennstäbe der Brennstäbe der mittleren Gruppe einen Gehalt an Neutronen absorbierendem Material haben, der größer als der Gehalt an Neutronen absorbierendem Material der beiden anderen Gruppen ist.

## Claims

1. Method for reconstituting a partially burnt nuclear fuel assembly, the rods of which contain a fuel consisting substantially of oxides of uranium and of plutonium, characterised in that the, or each rod extracted, is replaced by a new rod which contains no fuel substance, and consists of a mixture of a substance which is transparent to neutrons and of a neutron-absorbing substance, in proportions such that the average power of the assembly during one or more subsequent passage(s) in the reactor, is not modified by more than 8% relative to a non-modified assembly, and in that the variation of the radial power factor of the assembly F_{xy} does not exceed 1%.

2. Method according to claim 1, characterised in that the new rod consists of hafnium and zirconium.

3. Method according to claim 2, characterised in that the hafnium content is between 10% and 60% by weight.

4. Method according to claim 1, characterised in that the new rod consists of tantalum and niobium, the tantalum content being at least 50% by weight.

5. Method according to claim 1, characterised in that the substance of the new rod which is transparent to neutrons, consists of titanium.

6. Method according to any one of claims 1 to 4, characterised in that the mixture is in the form of sintered pellets, which have a density close to 70% of the theoretical density, and are contained in an alloyed sheath based on zirconium.

7. Method according to any one of claims 1 to 5, characterised in that the mixture is in the form of a solid slug.

8. Method according to any one of the preceding claims, characterised in that the new rod has a different composition, from amongst two or three contents, according to the location of the rod to be replaced in the assembly.

9. Method according to claim 1, characterised in that, the fuel assembly which constitutes the rods of a central group having a first content t₁ of plutonium, a peripheral group of rods having a content t₂ which is lower than t₁, and a corner group of rods having a content t₃ which is lower than t₂, the rods which replace the rods of the central group have a content of neutron-absorbing substance which is higher than the content of neutron-absorbing substance of the two others.
